# EUROPEAN PATENT SPECIFICATION

(11) **EP 2 670 657 B1**
(45) Date of publication and mention of the grant of the patent: **05.09.2018**
(21) Application number: 12705424.5
(22) Date of filing: 23.01.2012
(51) Int. Cl.: B63J 2/06, B63B 39/03

(54) **A FLOATING UNIT FOR ENERGY PRODUCTION**
SCHWIMMENDE ENERGIEERZEUGUNGSEINHEIT
UNITÉ FLOTTANTE PERMETTANT UNE PRODUCTION D'ÉNERGIE

(30) Priority: 31.01.2011 IT MI20110113
(43) Date of publication of application: 11.12.2013
(73) Proprietor: Studio Cichero Societa' Di Consulenza E Progettazione Tecnico-Navale A R.L., 16129 Genova (IT); PSGR S.r.L., 06135 Perugia (IT); Ferrari E Partners Di Ferrari Elena & C. S.a.S., 61032 Fano (PU) (IT)
(72) Inventor: CICHERO, Aldo, I-15010 Morsasco (AL) (IT); FERRARI, Angelo, I-61032 Fano (PU) (IT); FRANCESCHINI, Giordano, I-06135 Perugia (PG) (IT)
(74) Representative: Tansini, Elio Fabrizio
(86) International application number: PCT/IB2012/050294
(87) International publication number: WO 2012/104741

(56) References cited:
- EP-A1- 0 459 253
- WO-A1-97/01478
- WO-A1-2007/023215
- WO-A1-2007/023218
- DE-A1- 4 205 398
- GB-A- 545 226
- US-A- 2 356 392
- US-A- 3 965 837
- US-A- 4 276 849
- US-A1- 2005 064 768

## Description

The present invention relates to a floating unit for energy production, in particular electric energy, i.e. a floating power plant.

Exemplary embodiments of floating units are derivable, for example from anyone among US3965837 (according the preamble of claim 1), US 2005/054753 A1, DE 4205393 A1, GB 545 226 A, US 2 356 392 A. Moreover, US 3 935 337 A and EP 459253 A1 refers to particular embodiments of floating barges.

It is known that there are boats and ships used for producing and distributing electric energy to sea environments that can be hardly reached by electric power from land such as platforms, ships operating in the open sea, or other structures placed offshore. These boats can be further used in the vicinity of coast areas, to satisfy temporary or permanent electric energy wants in particular areas on dry land where possible infrastructures already existing on the spot for energy supply are not adapted to meet the requirements.

Boats for energy production generally consist of watercraft with superimposed generator sets on deck that can be suitably connected to the user bases, by submarine electric cables for example.

Boats are brought close to the user bases to be powered and moored in the sea by known anchoring systems. Boats can further be connected by submarine ducts to fuel distributors on dry land, capable of powering the generator sets also far away from the boat.

Therefore these boats appear to be very versatile because they can be easily carried to any sea place or big lakes, and are able to immediately supply electric energy to the user bases asking for it. However, the above described known boats have an important drawback connected with their great environmental impact.

It is in fact to be considered that for enabling appropriate power to be supplied to the user bases that are to be fed (generally industrial user bases and/or built-up areas), generator sets of considerable power are used. Consequently, very big boats are to be utilised that are able to support current generators of big sizes.

The presence of these boats in harbour areas or in the open sea therefore involves a considerable environmental impact, in particular in terms of landscape and/or of noise pollution which is usually produced by the machines placed on deck, often not in compliance with the international rules in force as regards protection of the environment.

In this context, the technical task underlying the present invention is to propose a floating unit for energy production capable of overcoming the above mentioned drawbacks.

In particular, it is an aim of the present invention to make available a floating unit for energy production that is able to minimise the environmental impact and at the same time to produce and distribute electric energy to any user base placed in the open sea and on dry land.

The technical task mentioned and the aims specified are substantially achieved by a floating unit for energy production, i.e. a floating power plant for energy generation or co-generation comprising the technical features set out in one or more of the appended claims. Further features and advantages of the present invention will become more apparent from the description given by way of non-limiting example of a preferred but not exclusive embodiment of a floating unit for energy production, as illustrated in the accompanying drawings, in which:
- Fig. 1 is a perspective view partly in section of a floating unit for energy production according to the present invention;
Fig. 2a is a side view of the floating unit seen in Fig. 1 in a respective floating condition;
- Fig. 2b is a side view of the floating unit seen in Fig. 1 in a respective condition of controlled constant trim;
- Fig. 3 is a side view of an auxiliary hull of the boat seen in Fig. 1; and
- Fig. 4 is a transverse sectional view of the auxiliary hull seen in Fig. 3.

In accordance with the accompanying drawings, a floating unit for energy production according to the present invention has been generally identified with reference numeral 1.

The floating unit for energy production comprises at least one hull 2, preferably consisting of a floating unit 3. In particular, the floating unit 3 has a peripheral rectangular extension with a substantially flat bottom wall 6 and preferably a substantially trapezoidal transverse section detectable in a vertical section plane.

In greater detail, the floating unit 3 has a perimetric wall 4 extending along the whole peripheral extension of the hull, so as to connect the bottom wall to a main deck 5 facing upwards.

It is further to be noted that at least in an upper portion of the hull, by way of indication extended over at least 50% of the overall height of the latter, the perimetric wall 4 has an inclined course so as to give the hull an upward tapering configuration.

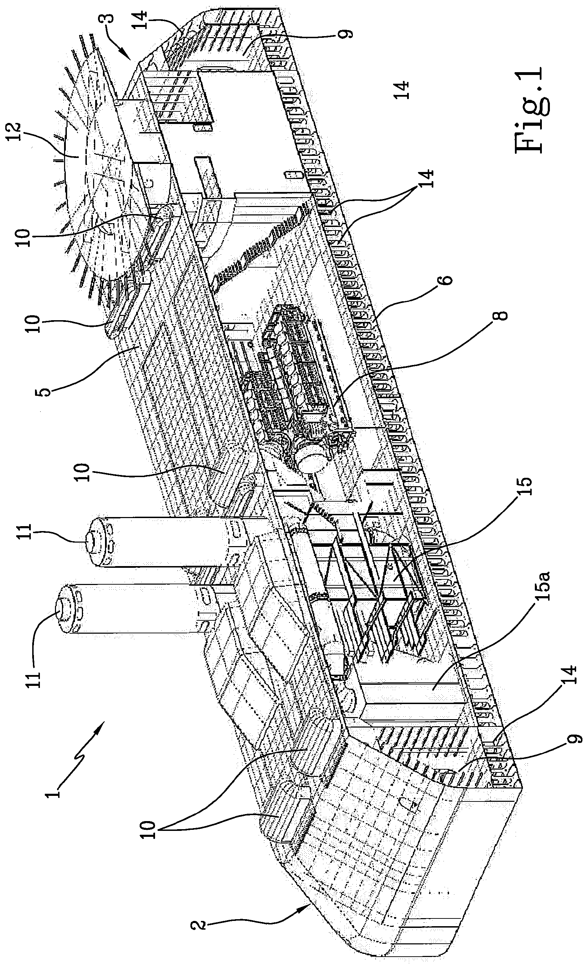

Referring particularly to Fig. 1, the floating unit 3 internally defines a hold 7 in which, under the main deck 5, one or more engine generator sets 8 or other means for electric energy production are housed, said means being only diagrammatically shown as of known type. Energy supply devices associated with the engine generator sets 8, comprising one or more electric cables being part of medium and/or high voltage electric lines, are adapted to be connected to a distribution line on land of the energy produced on board the floating unit 1.

Each of the engine generator sets 8 can for instance comprise an endothermic engine operatively coupled with an electric generator so as to produce electric energy by fuel burning, which fuel is preferably obtained from renewable sources or gas. The engine generator sets 8 conveniently sized according to requirements, can be provided for producing about 60 MW power, for example.

A heat exchange unit 15 can be also housed inside the hold 7, said unit being operatively connected to at least one water supply unit supplying water, preferably drawn from the sea following suitable desalination or from other watershed in which the floating unit 1 is installed. The heat exchange unit 15 operates along at least one exhaust duct from the engine generator set 8 to draw heat from the exhaust gases produced by the latter and transfer it to the water. Water can be thus converted to steam used for feeding an auxiliary turbine engine generator set 15a, preferably disposed inside the hold 7 as well.

The water supply unit not shown in the drawings, can advantageously comprise at least one desalination unit to desalinate the water to be sent to the heat exchange unit 15 and the auxiliary engine generator set.

Also associated with the floating unit 1 is means for feeding fuel to the engine generator sets 8. This feeding means preferably comprises at least one bay 9 for holding fuel, extending along the perimetric wall 4 of hull 2, around the hold 7.

In case of need, in the holding bay 9 one or more oil-tight compartments can be defined for housing lubricating oils or other liquid products intended for operation of the engine generator sets 8 and/or the auxiliary engine generators.

The floating unit 1 is further provided with at least one or more air-feeding ducts 10 emerging from the main deck 5 for connecting the engine generator sets 8 to the external environment, directly or through the hold 7. One or more exhaust ducts 11, preferably emerging from the main deck 5 as well, connect the engine generator sets with the external environment, directly or through the heat exchange units 15 and/or other treatment systems for the exhaust gases so as to clean them.

As shown in the preferred embodiment shown in the accompanying drawings, advantageously installed on the main deck 5 can be a landing pad 12 for helicopters.

Advantageously, the hold 7 size and/or that of the other parts of hull 2 are calculated in such a manner that, when in water, at least during normal stationary operation for energy production, the hull itself has a draught height HI at least as high as 40% of a bulwarks height H2 to be measured between the water level and the main deck 5. More particularly, the bulwarks height H2 is preferably less than half the draught height HI.

In case of need, it may be provided for the hull to be immersed in water up to the main deck 5, provided the air-feeding ducts 10 and preferably the exhaust ducts 11 too emerge at least partly above the water surface.

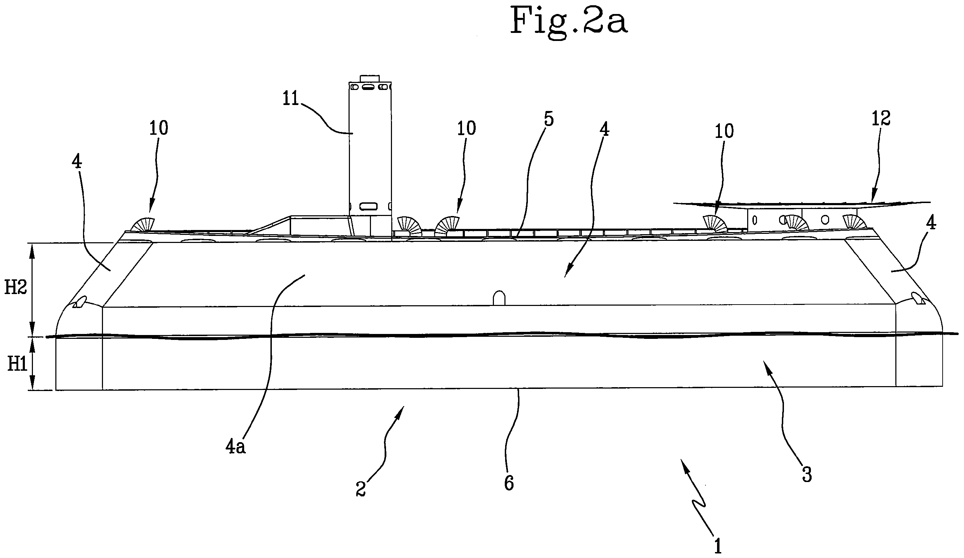

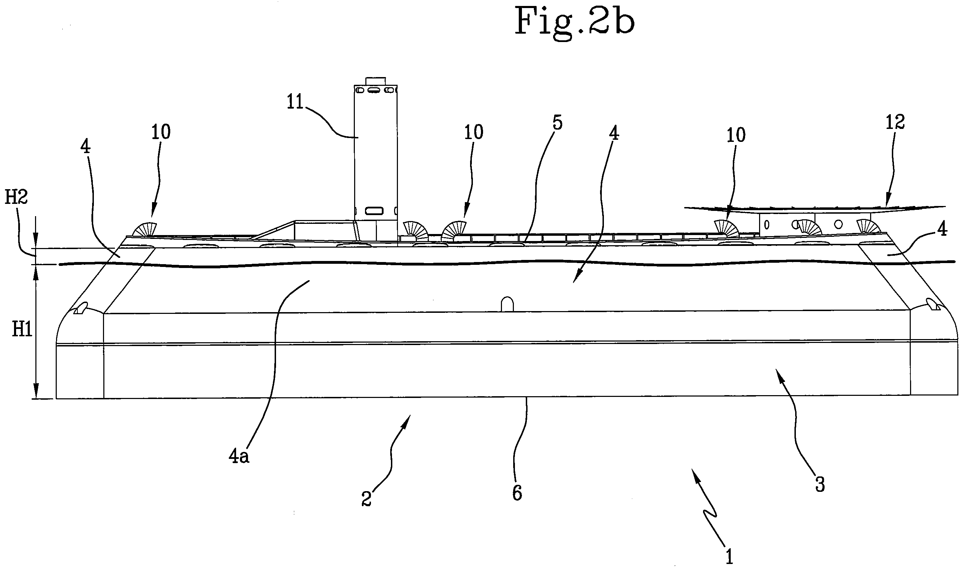

To promote control of the hull immersion degree, so as to give said hull 2 a constant trim irrespective of the progressive consumption of fuel drawn from bay 9, means 13 for hydrostatic balance of the hull may be provided. In case of need, the hydrostatic balance means 13 can intervene on the hull trim for positioning said hull 2 between a maximum immersion condition (Fig. 2b) to be used during normal stationary operation for energy production, and a maximum floating condition (Fig. 2a) to be adopted during transfer navigation, for example.

The hydrostatic balance means 13 comprises at least one floodable interspace 14 and a water distribution unit for introducing/drawing water into and out of said interspace. More particularly, the water distribution unit, not shown, can for example comprise a pump controlled by a float or a level sensor to transfer water between the interspace 14 and the watershed in which the boat operates, so as to control the immersion degree of the hull 2.

Preferably, the interspace 14 is formed in the bottom wall 6 and/or the side wall 4 of the hull 2, as better illustrated in the sectional view in Fig. 1.

Advantageously, a plurality of floodable interspaces 14 are provided, in fluid communication with each other and distributed over the whole side wall 4 and the whole extension of the bottom wall 6.

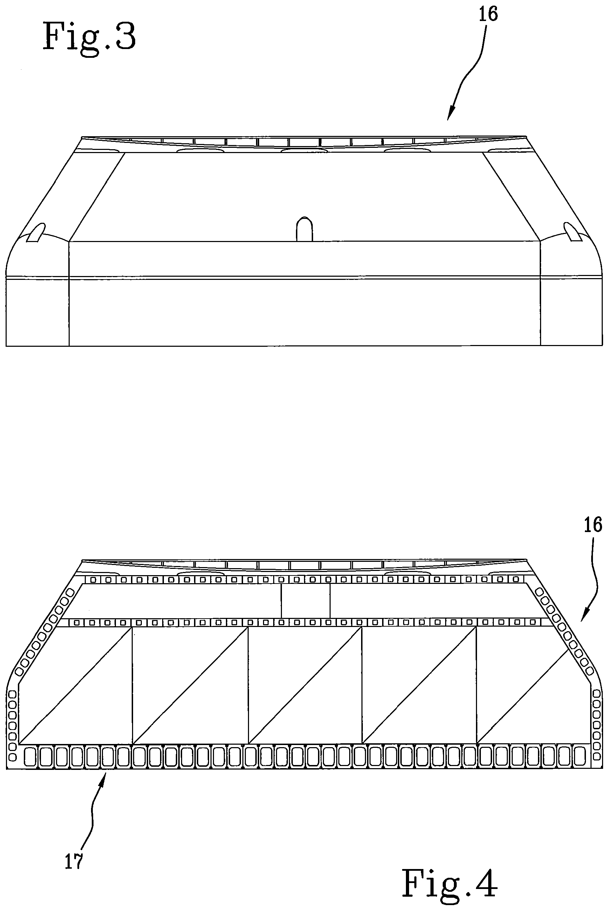

In accordance with a possible variant of the invention the fuel feeding means can further comprise, alternatively or in addition to the holding bay 9, at least one connecting duct coming from a fuel store provided on land, or from at least one auxiliary hull 16, shown in Figs. 3 and 4, adapted to contain the feeding fuel. This connecting duct, not shown, extends from the dry land or the auxiliary hull 16 to the floating unit 3 to feed fuel to the engine generator sets 8, directly or through the holding bay 9.

The auxiliary hull 16 too can have respective hydrostatic balance means 17 similar to the above described means with reference to hull 2, to position the auxiliary hull and keep it in a constant trim condition in which it is preferably immersed in water for at least one third of its overall height.

In greater detail, the hydrostatic balance means 17 is preferably intended for positioning the auxiliary hull 16 between an immersed condition in which this means is fully or almost fully under the water surface and a floating condition in which it partly emerges from the water surface.

Boat 1 according to the invention advantageously lends itself to be towed in the open sea or along the coast, preferably under maximum floating conditions, until close to the place where energy supply is required.

Once the desired place has been reached, known anchoring systems such as articulated semirigid spacers for arrangements in wharves, chains and anchors for depths of about 150 m, or tension legs for deeper waters, can be used for stabilising the position of the floating unit 1 and the auxiliary hull 16, if any.

Positioning of the engine generator sets and the other accessory apparatus, closed inside the hold 7, under the main deck 5, enables the bulkiness in height of the emerged portion of the boat to be greatly reduced. The great draught height in water and the reduced bulwarks height enable the environmental impact to be remarkably reduced in terms of landscape.

In fact, the floating unit is adapted to be fully hidden even at a short distance from the coast or at all events it can be hardly visible, so that it does not create too much trouble in terms of landscape. In addition, the reduced draught height or lack of it minimises the floating unit's sensitivity to the wind action, making steady anchoring of it simpler. In addition, the tapering outline of the upper portion of hull 2 makes the boat not very sensitive to the wave action, even during strong sea storms.

Advantageously, due to the presence of the floodable interspaces 14 the immersion degree of the floating unit 1 can be modulated depending on requirements. In particular, the floodable interspaces 14 can be advantageously emptied for obtaining the maximum-floating condition during navigation and filled during a stationary step for adjusting the boat trim depending on requirements.

In addition, positioning of the engine generators 8, enclosed in hold 7 abundantly or fully under the water level, causes an important reduction in the noise produced outside the boat during running, thus eliminating problems connected with noise pollution above all when the boat is used in regions close to the coast.

Furthermore, since energy is produced during the immersion, the heat produced by the engine generators 8 can be easily dispersed so that it is not necessary to forcedly ventilate the hold 7 or, in any case, conditioning of the environments inside the hold is greatly simplified.

## Claims

1. A floating unit for energy production, comprising:
- at least one hull (2), defining at least one hold (7) closed on the upper part thereof by a main deck (5); **characterised in that** the floating unit comprises
- at least one engine generator set (8) for producing electric energy through fuel burning,
- energy supply devices associated with the engine generator set and connectable to a distribution line on land of the electric energy produced on board of the floating unit;
- means (9) for feeding fuel to the engine generator set; and
wherein said engine generator set (8) is housed in the hold (7) at a position underneath the main deck (5) and connected to the external environment by at least one air-feeding duct (10), and preferably an exhaust duct (11) emerging from the main deck (5).

2. A floating unit as claimed in claim 1, wherein the hull in the water has a draught height at least as high as 40% of a bulwarks height to be measured between the water level and the main deck (5).

3. A floating unit as claimed in the preceding claim, wherein said bulwarks height is less than 1/2 of the draught height.

4. A floating unit as claimed in one or more of the preceding claims, wherein the hull is immersed in the water until the main deck (5), said at least one air-feeding duct (10) being at least partly emerging from the water surface.

5. A floating unit as claimed in one or more of the preceding claims, further comprising hydrostatic balance means (13) of the hull (2) for positioning and maintaining the hull (2) to a constant trim condition in water.

6. A floating unit as claimed in the preceding claim, wherein said hydrostatic balance means (13) of the hull (2) comprises at least one floodable interspace (14) and a water distribution unit for introducing/drawing water into and out of said interspace (14).

7. A floating unit as claimed in the preceding claim, **characterised in that** said floodable interspace (14) is formed in a bottom wall (6) and/or a perimetric wall (4) of said hull (2).

8. A floating unit as claimed in claim 6 or 7, wherein said hydrostatic balance means (13) comprises a plurality of floodable interspaces (14), in fluid communication with each other.

9. A floating unit as claimed in one or more of the preceding claims, wherein said fuel feeding means comprises at least one bay (9) for holding fuel which extends along a perimetric wall (4) of the hull around the hold (7).

10. A floating unit as claimed in one or more of the preceding claims, wherein said hull (2) has a bottom wall (6) substantially flat..

11. A floating unit as claimed in the preceding claim, wherein said hull (2) has a substantially trapezoidal transverse section tapering upwards.

12. A floating unit as claimed in one or more of the preceding claims, further comprising:
- at least one water supply unit for supplying water, preferably drawn from a watershed in which the boat is installed;
- a heat exchange unit (15) operatively connected to a water supply unit and operating along at least one exhaust duct coming from the engine generator set, for drawing heat from the exhaust gases of the engine generator set and transferring it to the water;
- an auxiliary turbine engine generator set supplied with steam from the heat-exchange unit;
- at least one of said heat-exchange unit (15) and auxiliary engine generator set being preferably disposed within the hold (7).

13. A floating unit as claimed in anyone of the preceding claims, wherein said fuel feeding means comprises a fuel-containing auxiliary hull (16), said auxiliary hull (16) having at least one duct for connection with said engine generator set (8) (directly or through a tank).

14. A floating unit as claimed in the preceding claim, **characterised in that** said auxiliary hull (16) comprises respective hydrostatic balance means (17) for positioning and maintaining the auxiliary hull (16) to a constant trim condition in which said hull is immersed in the water for at least 1/3 of the overall height of the hull itself.

15. A floating unit as claimed in anyone of the preceding claims, wherein said energy supply devices comprises one or more electric cables being part of medium and/or high voltage electric lines.

## Patentansprüche

1. Schwimmende Energieerzeugungseinheit, umfassend:
- mindestens einen Rumpf (2), der mindestens einen Laderaum (7) definiert, der an seinem oberen Teil durch ein Hauptdeck (5) verschlossen ist;
**dadurch gekennzeichnet, dass** die schwimmende Einheit umfasst
- mindestens einen Motorgeneratorsatz (8) zur Erzeugung elektrischer Energie durch Kraftstoffverbrennung,
- Energieversorgungseinrichtungen, die mit dem Motorgeneratorsatz verbunden sind und an eine Verteilungsleitung an Land der an Bord der schwimmenden Einheit erzeugten elektrischen Energie angeschlossen werden können;
- Mittel (9) zum Zuführen von Kraftstoff zu dem Motorgeneratorsatz; und
wobei der Motorgeneratorsatz (8) in dem Laderaum (7) an einer Position unterhalb des Hauptdecks (5) untergebracht ist und mit der äußeren Umgebung durch mindestens einen Luftzufuhrkanal (10) und vorzugsweise einen aus dem Hauptdeck (5) austretenden Abgaskanal (11) verbunden ist.

2. Schwimmende Einheit nach Anspruch 1, wobei der Rumpf im Wasser eine Tiefgangshöhe von mindestens 40 % einer zwischen dem Wasserspiegel und dem Hauptdeck (5) zu messenden Schanzkleidhöhe aufweist.

3. Schwimmende Einheit, nach dem vorhergehenden Anspruch, wobei die Schanzkleidhöhe weniger als die Hälfte der Tiefgangshöhe beträgt.

4. Schwimmende Einheit, nach einem oder mehreren der vorhergehenden Ansprüche, wobei der Rumpf bis zum Hauptdeck (5) in das Wasser eingetaucht ist, wobei der mindestens eine Luftzufuhrkanal (10) mindestens teilweise aus der Wasseroberfläche austritt.

5. Schwimmende Einheit, nach einem oder mehreren der vorhergehenden Ansprüche, ferner mit hydrostatischen Ausgleichsmitteln (13) des Rumpfes (2) zum Positionieren und Halten des Rumpfes (2) auf einen konstanten Trimmzustand in Wasser.

6. Schwimmende Einheit nach dem vorhergehenden Anspruch, wobei die hydrostatischen Ausgleichsmittel (13) des Rumpfes (2) mindestens einen flutbaren Zwischenraum (14) und eine Wasserverteilungseinheit zum Ein- und Ausleiten von Wasser in den Zwischenraum (14) aufweisen.

7. Schwimmende Einheit, nach dem vorhergehenden Anspruch, **dadurch gekennzeichnet, dass** der flutbare Zwischenraum (14) in einer Bodenwand (6) und/oder einer Umfangswand (4) des Rumpfes (2) ausgebildet ist.

8. Schwimmende Einheit nach Anspruch 6 oder 7, wobei die hydrostatischen Ausgleichsmittel (13) eine Vielzahl von flutbaren Zwischenräumen (14) in Fluidverbindung miteinander aufweisen.

9. Schwimmende Einheit, nach einem oder mehreren der vorhergehenden Ansprüche, wobei die Kraftstoffzuführmittel mindestens eine Bucht (9) zum Halten von Kraftstoff umfasst, die sich entlang einer Umfangswand (4) des Rumpfes um den Laderaum (7) herum erstreckt.

10. Schwimmende Einheit, nach einem oder mehreren der vorhergehenden Ansprüche, wobei der Rumpf (2) eine Bodenwand (6) aufweist, die im wesentlichen flach ist.

11. Schwimmende Einheit nach dem vorhergehenden Anspruch, wobei der Rumpf (2) einen im wesentlichen trapezförmigen Querschnitt aufweist, der sich nach oben verjüngt.

12. Schwimmende Einheit, nach einem oder mehreren der vorhergehenden Ansprüche, ferner umfassend:
- mindestens eine Wasserversorgungseinheit zur Wasserversorgung, vorzugsweise aus einer Wasserscheide, in der das Boot installiert ist;
- eine Wärmetauschereinheit (15), die betriebsmäßig mit einer Wasserversorgungseinheit verbunden ist und entlang mindestens eines Abgaskanals arbeitet, der von dem Motorgeneratorsatz kommt, um Wärme aus den Abgasen des Motorgeneratorsatzes zu ziehen und sie an das Wasser zu übertragen;
- ein Hilfsturbinenmotorgeneratorsatz, der mit Dampf aus der Wärmetauschereinheit versorgt wird;
- mindestens eine der Wärmetauschereinheiten (15) und der Hilfsmotorgeneratorsatz, die vorzugsweise innerhalb des Laderaums (7) angeordnet sind.

13. Schwimmende Einheit, nach irgendeinem der vorstehenden Ansprüche, wobei die Kraftstoffzuführmittel einen Kraftstoff enthaltenden Hilfsrumpf (16) umfasst, wobei der Hilfsrumpf (16) mindestens einen Kanal zur Verbindung mit dem Motorgeneratorsatz (8) (direkt oder durch einen Tank) aufweist.

14. Schwimmende Einheit, nach dem vorhergehenden Anspruch, **dadurch gekennzeichnet, dass** der Hilfsrumpf (16) entsprechende hydrostatische Ausgleichsmittel (17) zum Positionieren und Halten des Hilfsrumpfes (16) in einem konstanten Trimmzustand aufweist, in dem der Rumpf für mindestens 1/3 der Gesamthöhe des Rumpfes selbst in das Wasser eingetaucht ist.

15. Schwimmende Einheit, nach einem der vorhergehenden Ansprüche, wobei die Energieversorgungseinrichtungen ein oder mehrere elektrische Kabel umfassen, die Teil von elektrischen Mittel- und/oder Hochspannungsleitungen sind.

## Revendications

1. Unité flottante permettant une production d'énergie, comprenant :
- au moins une coque (2), définissant au moins une soute (7) fermée sur sa partie supérieure par un pont principal (5) ;
**caractérisée en ce que** ladite unité flottante comprend
- au moins un groupe électrogène (8) servant à produire de l'énergie électrique par la combustion d'un combustible,
- des appareils de fourniture d'énergie associés au groupe électrogène et pouvant être reliés à une ligne de distribution sur terre de l'énergie électrique produite à bord de l'unité flottante ;
- des moyens (9) pour alimenter en carburant le groupe électrogène ; et
dans laquelle ledit groupe électrogène (8) est logé dans la soute (7), en correspondance d'une position située sous le pont principal (5), et relié à l'environnement extérieur par au moins une conduite de prise d'air (10), et de préférence un conduit d'échappement (11) émergeant du pont principal (5).

2. Unité flottante selon la revendication 1, dans laquelle la coque dans l'eau comporte une hauteur de tirant d'eau au moins de 40 % aussi élevée qu'une hauteur d'un pavois à mesurer entre le niveau de l'eau et le pont principal (5).

3. Unité flottante selon la revendication précédente, dans laquelle ladite hauteur de pavois est inférieure à la moitié de la hauteur de tirant d'eau.

4. Unité flottante selon une ou plusieurs revendications précédentes, dans laquelle la coque est immergée dans l'eau jusqu'au pont principal (5), ladite au moins une conduite de prise d'air (10) émergeant au moins partiellement de la surface de l'eau.

5. Unité flottante selon une ou plusieurs revendications précédentes, comprenant de plus des moyens d'équilibrage hydrostatiques (13) de la coque (2) pour positionner et maintenir la coque (2) à une condition d'assiette constante dans l'eau.

6. Unité flottante selon la revendication précédente, dans laquelle lesdits moyens d'équilibrage hydrostatiques (13) de la coque (2) comprennent au moins un interstice inondable (14) et une unité de distribution d'eau pour introduire/puiser de l'eau dans ledit interstice (14) et hors de celui-ci.

7. Unité flottante selon la revendication précédente, **caractérisée en ce que** ledit interstice inondable (14) est formé dans une cloison inférieure (6) et/ou une cloison périphérique (4) de ladite coque (2).

8. Unité flottante selon la revendication 6 ou 7, dans laquelle lesdits moyens d'équilibrage hydrostatiques (13) comprennent une pluralité d'interstices inondables (14) en communication fluidique les uns avec les autres.

9. Unité flottante selon une ou plusieurs revendications précédentes, dans laquelle lesdits moyens d'alimentation en carburant comprennent au moins un compartiment (9), pour maintenir le carburant, qui se prolonge le long d'une cloison périphérique (4) de la coque autour de la soute (7).

10. Unité flottante selon une ou plusieurs revendications précédentes, dans laquelle ladite coque (2) comporte une cloison inférieure (6) substantiellement plate.

11. Unité flottante selon la revendication précédente, dans laquelle ladite coque (2) comporte une section transversale substantiellement trapézoïdale fuselée vers le haut.

12. Unité flottante selon l'une ou plusieurs des revendications précédentes, comprenant de plus :
- au moins une unité d'alimentation en eau pour fournir de l'eau, de préférence puisée d'un bassin hydrographique dans lequel le bateau est installé ;
- une unité d'échange de chaleur (15) fonctionnellement reliée à une unité d'alimentation en eau et fonctionnant le long d'au moins un conduit d'évacuation provenant du groupe électrogène, pour tirer de la chaleur des gaz d'échappement du groupe électrogène et la transférer dans l'eau ;
- un groupe électrogène auxiliaire à turbine alimenté par la vapeur provenant de l'unité d'échange de chaleur ;
- au moins l'un parmi ladite unité d'échange de chaleur (15) et ledit groupe électrogène auxiliaire étant de préférence disposé à l'intérieur de la soute (7).

13. Unité flottante selon l'une quelconque des revendications précédentes, dans laquelle lesdits moyens d'alimentation en carburant comprennent une coque auxiliaire contenant du carburant (16), ladite coque auxiliaire (16) comportant au moins un conduit pour le raccordement au dit groupe électrogène (8) (directement ou à travers un réservoir).

14. Unité flottante selon la revendication précédente, **caractérisée en ce que** ladite coque auxiliaire (16) comprend des moyens d'équilibrage hydrostatiques (17) respectifs pour positionner et maintenir la coque auxiliaire (16) à une condition d'assiette constante dans laquelle ladite coque est immergée dans l'eau sur au moins 1/3 de la hauteur totale de la coque elle-même.

15. Unité flottante selon l'une quelconque des revendications précédentes, dans laquelle lesdits appareils de fourniture d'énergie comprennent un ou plusieurs câbles électriques faisant partie de lignes électrique à moyenne et/ou haute tension.
